# EUROPEAN PATENT APPLICATION

(11) **EP 4 503 686 A1**
(43) Date of publication of application: **05.02.2025**
(21) Application number: 23778191.9
(22) Date of filing: 28.03.2023
(51) Int. Cl.: H04W 8/14

(54) **NETWORK ELEMENT REGISTRATION METHOD, MODEL REQUESTING METHOD AND DEVICE, NETWORK ELEMENT, COMMUNICATION SYSTEM, AND STORAGE MEDIUM**

(30) Priority: 28.03.2022 CN 202210317248; 08.04.2022 CN 202210370099
(71) Applicant: VIVO MOBILE COMMUNICATION CO., LTD., Dongguan, Guangdong 523863 (CN)
(72) Inventor: CHENG, Sihan, Dongguan, Guangdong 523863 (CN); CHONG, Weiwei, Dongguan, Guangdong 523863 (CN)
(74) Representative: Murgitroyd & Company
(86) International application number: PCT/CN2023/084360
(87) International publication number: WO 2023/185826

(57) **Abstract**

This application discloses a network element registration method and apparatus, a model request method and apparatus, a network element, a communication system, and a storage medium. The method model request includes: sending, by a first network element, a network element registration request to a second network element, where the network element registration request is used to register information of the first network element to the second network element, and the information of the first network element includes model training related capability information of the first network element, where the model training related capability information of the first network element includes at least one of the following: model platform information supported by the first network element; model description method information supported by the first network element; vendor information of the first network element; network element object information for which a model of the first network element can be shared; first indication information, where the first indication information is used to indicate whether the first network element supports model sharing or model interoperation with other network elements; model accuracy information reachable by the first network element; and model training speed information of the first network element.

## Description

### CROSS-REFERENCE TO RELATED APPLICATIONS

This application claims priority to Chinese Patent Application No. 202210317248.5, filed in China on March 28, 2022, and Chinese Patent Application No. 202210370099.9, filed in China on April 8, 2022, which are incorporated herein by reference in their entireties.

### TECHNICAL FIELD

This application pertains to the field of communication technologies, and specifically relates to a network element registration method and apparatus, a model request method and apparatus, a network element, a communication system, and a storage medium.

### BACKGROUND

With continuous development of communication technologies, network elements can transfer models to each other for interoperability. However, in a process of model transfer, one network element does not know a model of which platform framework can be received and used by the other network element, and does not know a model of which platform framework exists in the other network element, or whether a model of a platform framework desired by the network element exists in the other network element. Therefore, unnecessary waste of time, traffic, communication signals, and other resources is caused. For example, in the process of model transfer, if models of different platform frameworks are transferred, the transferred models cannot be used. Therefore, a success rate of model transfer is low.

### SUMMARY

Embodiments of this application provide a network element registration method and apparatus, a model request method and apparatus, a network element, a communication system, and a storage medium to resolve a problem that a success rate of model transfer in the prior art is low.

According to a first aspect, a network element registration method is provided. The method includes: sending, by a first network element, a network element registration request to a second network element, where the network element registration request is used to register information of the first network element to the second network element, and the information of the first network element includes model training related capability information of the first network element, where the model training related capability information of the first network element includes at least one of the following: model platform information supported by the first network element; model description method information supported by the first network element; vendor information of the first network element; network element object information for which a model of the first network element can be shared; first indication information, where the first indication information is used to indicate whether the first network element supports model sharing or model interoperation with other network elements; model accuracy information reachable by the first network element; and model training speed information of the first network element.

In this embodiment of this application, the first network element may register the network element information of the first network element to the second network element by using the network element registration request, to register the first network element to the second network element. Because the network element registration information of the first network element includes the model training related capability information, other network elements can discover, through the second network element, the first network element meeting a model training requirement, to resolve a problem of how the first network element registers the network element information to the second network element and can be discovered by the other network elements.

According to a second aspect, a network element registration apparatus is provided and applied to a first network element. The network element registration apparatus includes a sending module. The sending module is configured to send a network element registration request to a second network element, where the network element registration request is used to register information of the first network element to the second network element, and the information of the first network element includes model training related capability information of the first network element, where the model training related capability information of the first network element includes at least one of the following: model platform information supported by the first network element; model description method information supported by the first network element; vendor information of the first network element; network element object information for which a model of the first network element can be shared; first indication information, where the first indication information is used to indicate whether the first network element supports model sharing or model interoperation with other network elements; model accuracy information reachable by the first network element; and model training speed information of the first network element.

According to a third aspect, a network element registration method is provided. The method includes: receiving, by a second network element, a network element registration request sent by a first network element, where the network element registration request is used to register information of the first network element to the second network element, and the information of the first network element includes model training related capability information of the first network element, where the model training related capability information of the first network element includes at least one of the following: model platform information supported by the first network element; model description method information supported by the first network element; vendor information of the first network element; network element object information for which a model of the first network element can be shared; first indication information, where the first indication information is used to indicate whether the first network element supports model sharing or model interoperation with other network elements; model accuracy information reachable by the first network element; and model training speed information of the first network element.

In this embodiment of this application, the second network element may register the network element information of the first network element to the second network element by receiving the network element registration request sent by the first network element, to register the first network element to the second network element. Because the network element registration information of the first network element includes the model training related capability information, other network elements can discover, through the second network element, the first network element meeting a model training requirement, to resolve a problem of how the first network element registers the network element information to the second network element and can be discovered by the other network elements.

According to a fourth aspect, a network element registration apparatus is provided and applied to a second network element. The network element registration apparatus includes a receiving module. The receiving module is configured to receive a network element registration request sent by a first network element, where the network element registration request is used to register information of the first network element to the second network element, and the information of the first network element includes model training related capability information of the first network element, where the model training related capability information of the first network element includes at least one of the following: model platform information supported by the first network element; model description method information supported by the first network element; vendor information of the first network element; network element object information for which a model of the first network element can be shared; first indication information, where the first indication information is used to indicate whether the first network element supports model sharing or model interoperation with other network elements; model accuracy information reachable by the first network element; and model training speed information of the first network element.

According to a fifth aspect, a model request method is provided. The method includes: sending, by a third network element, a model request message to a first network element, where the model request message is used to request to obtain a model, the model request message includes second information, and the second information includes at least one of the following: model platform information, model description method information, model accuracy information, vendor information of the third network element, and identification information of the third network element; and obtaining, by the third network element from the first network element, information of a model matching the second information.

In this embodiment of this application, the third network element may request to obtain the model from the first network element by using the model request. Because the model request includes the second information, the third network element can obtain, from the first network element, the information of the model matching the second information. Therefore, a success rate of model transfer is increased.

According to a sixth aspect, a model request apparatus is provided and applied to a third network element. The model request apparatus includes a sending module and an obtaining module. The sending module is configured to send a model request message to a first network element, where the model request message is used to request to obtain a model, the model request message includes second information, and the second information includes at least one of the following: model platform information, model description method information, model accuracy information, vendor information of the third network element, and identification information of the third network element. The obtaining module is configured to obtain, from the first network element, information of a model matching the second information.

According to a seventh aspect, a model request method is provided. The method includes: receiving, by a first network element, a model request message sent by a third network element, where the model request message is used to request to obtain a model, the model request message includes second information, and the second information includes at least one of the following: model platform information, model description method information, model accuracy information, vendor information of the third network element, and identification information of the third network element, where the second information is used by the third network element to obtain, from the first network element, information of a model matching the second information.

In this embodiment of this application, the first network element may receive the model request sent by the third network element. Because the model request includes the second information, the third network element can obtain, from the first network element, the information of the model matching the second information. Therefore, a success rate of model transfer is increased.

According to an eighth aspect, a model request apparatus is provided and applied to a first network element. The model request apparatus includes a receiving module. The receiving module is configured to receive a model request message sent by a third network element, where the model request message is used to request to obtain a model, the model request message includes second information, and the second information includes at least one of the following: model platform information, model description method information, model accuracy information, vendor information of the third network element, and identification information of the third network element, where the second information is used by the third network element to obtain, from the first network element, information of a model matching the second information.

According to a ninth aspect, a network element is provided. The network element includes a processor and a memory. The memory stores a program or instructions executable on the processor. When the program or instructions are executed by the processor, the steps of the network element registration method according to the first aspect are implemented.

According to a tenth aspect, a network element is provided and includes a processor and a communication interface. The communication interface is configured to send a network element registration request to a second network element, where the network element registration request is used to register information of a first network element to the second network element, and the information of the first network element includes model training related capability information of the first network element, where the model training related capability information of the first network element includes at least one of the following: model platform information supported by the first network element; model description method information supported by the first network element; model accuracy information reachable by the first network element; and model training speed information of the first network element.

According to an eleventh aspect, a network element is provided. The network element includes a processor and a memory. The memory stores a program or instructions executable on the processor. When the program or instructions are executed by the processor, the steps of the network element registration method according to the third aspect are implemented.

According to a twelfth aspect, a network element is provided and includes a processor and a communication interface. The communication interface is configured to receive a network element registration request sent by a first network element, where the network element registration request is used to register information of the first network element to a second network element, and the information of the first network element includes model training related capability information of the first network element, where the model training related capability information of the first network element includes at least one of the following: model platform information supported by the first network element; model description method information supported by the first network element; model accuracy information reachable by the first network element; and model training speed information of the first network element.

According to a thirteenth aspect, a network element is provided. The network element includes a processor and a memory. The memory stores a program or instructions executable on the processor. When the program or instructions are executed by the processor, the steps of the model request method according to the fifth aspect are implemented.

According to a fourteenth aspect, a network element is provided and includes a processor and a communication interface. The communication interface is configured to send a model request message to a first network element, where the model request message is used to request to obtain a model, the model request message includes second information, and the second information includes at least one of the following: model platform information, model description method information, model accuracy information, vendor information of a third network element, and identification information of the third network element; and obtain, by the third network element from the first network element, information of a model matching the second information.

According to a fifteenth aspect, a network element is provided. The network element includes a processor and a memory. The memory stores a program or instructions executable on the processor. When the program or instructions are executed by the processor, the steps of the model request method according to the seventh aspect are implemented.

According to a sixteenth aspect, a network element is provided and includes a processor and a communication interface. The communication interface is configured to receive a model request message sent by a third network element, where the model request message is used to request to obtain a model, the model request message includes second information, and the second information includes at least one of the following: model platform information, model description method information, model accuracy information, vendor information of the third network element, and identification information of the third network element, where the second information is used by the third network element to obtain, from a first network element, information of a model matching the second information.

According to a seventeenth aspect, a communication system is provided. The communication system includes the network element registration apparatus according to the second aspect, the network element registration apparatus according to the fourth aspect, the model request apparatus according to the sixth aspect, and the model request apparatus according to the eighth aspect; or the communication system includes the network elements according to the ninth aspect, the eleventh aspect, the thirteenth aspect, and the fifteenth aspect; or the communication system includes the network elements according to the tenth aspect, the twelfth aspect, the fourteenth aspect, and the sixteenth aspect. The network elements may be configured to perform the steps of the methods according to the first aspect, the third aspect, the fifth aspect, and the seventh aspect.

According to an eighteenth aspect, a readable storage medium is provided. The readable storage medium stores a program or instructions. When the program or instructions are executed by a processor, the steps of the method according to the first aspect are implemented, or the steps of the method according to the third aspect are implemented, or the steps of the method according to the fifth aspect are implemented, or the steps of the method according to the seventh aspect are implemented.

According to a nineteenth aspect, a chip is provided. The chip includes a processor and a communication interface. The communication interface is coupled to the processor. The processor is configured to run a program or instructions to implement the method according to the first aspect, or implement the method according to the third aspect, or implement the method according to the fifth aspect, or implement the method according to the seventh aspect.

According to a twentieth aspect, a computer program or program product is provided. The computer program or program product is stored in a storage medium. The computer program or program product is executed by at least one processor to implement the steps of the network element registration method according to the first aspect, or implement the steps of the network element registration method according to the third aspect, or implement the steps of the model request method according to the fifth aspect, or implement the steps of the model request method according to the seventh aspect.

### BRIEF DESCRIPTION OF DRAWINGS

FIG. 1 is a schematic diagram of an architecture of a wireless communication system according to an embodiment of this application;
FIG. 2 is a schematic diagram of a neural network according to an embodiment of this application;
FIG. 3 is a schematic diagram of a neuron according to an embodiment of this application;
FIG. 4 is a first flowchart of a network element registration method according to an embodiment of this application;
FIG. 5 is a second flowchart of a network element registration method according to an embodiment of this application;
FIG. 6 is a third flowchart of a network element registration method according to an embodiment of this application;
FIG. 7 is a fourth flowchart of a network element registration method according to an embodiment of this application;
FIG. 8 is a first flowchart of a model request method according to an embodiment of this application;
FIG. 9 is a second flowchart of a model request method according to an embodiment of this application;
FIG. 10 is a third flowchart of a model request method according to an embodiment of this application;
FIG. 11 is a flowchart of a network element registration method and a model request method according to an embodiment of this application;
FIG. 12 is a first schematic diagram of a structure of a network element registration apparatus according to an embodiment of this application;
FIG. 13 is a second schematic diagram of a structure of a network element registration apparatus according to an embodiment of this application;
FIG. 14 is a first schematic diagram of a structure of a model request apparatus according to an embodiment of this application;
FIG. 15 is a second schematic diagram of a structure of a model request apparatus according to an embodiment of this application;
FIG. 16 is a schematic diagram of a hardware structure of a communication device according to an embodiment of this application; and
FIG. 17 is a schematic diagram of a hardware structure of a network element according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

It should be noted that technologies described in the embodiments of this application are not limited to a long term evolution (Long Term Evolution, LTE)/LTE-Advanced (LTE-Advanced, LTE-A) system, and can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. The described technologies may be used for the foregoing systems and radio technologies, and may also be used for other systems and radio technologies. However, in the following descriptions, the new radio (New Radio, NR) system is described for an illustrative purpose, and NR terms are used in most of the following descriptions. These technologies may also be applied to other applications than an NR system application, for example, a 6th Generation (6th Generation, 6G) communication system.

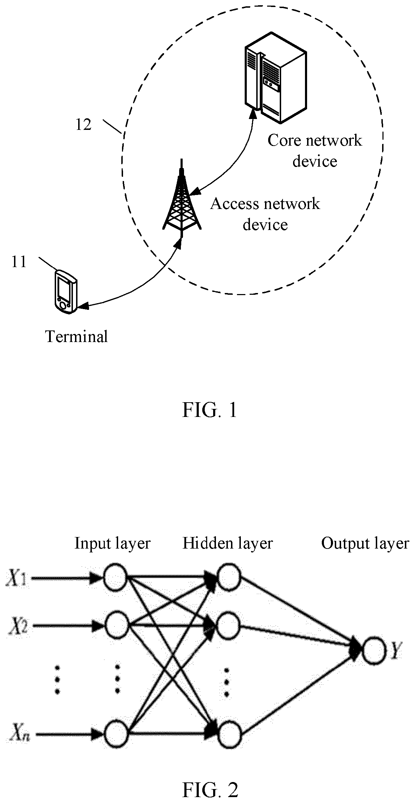

FIG. 1 is a block diagram of a wireless communication system to which an embodiment of this application may be applied. The wireless communication system includes a terminal 11 and a network-side device 12. The terminal 11 may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR) or virtual reality (virtual reality, VR) device, a robot, a wearable device (Wearable Device), vehicle user equipment (VUE), pedestrian user equipment (PUE), a smart home (a home device having a wireless communication function, such as a refrigerator, a television, a washing machine, or furniture), a game console, a personal computer (personal computer, PC), a teller machine, or a self-service machine. The wearable device includes a smartwatch, a smart band, a smart headphone, smart glasses, smart jewelry (a smart bracelet, a smart wrist chain, a smart ring, a smart necklace, a smart anklet, a smart ankle chain, or the like), a smart wristband, smart clothing, or the like. It should be noted that a specific type of the terminal 11 is not limited in the embodiments of this application. The network-side device 12 may include an access network device or a core network device. The access network device 12 may also be referred to as a radio access network device, a radio access network (Radio Access Network, RAN), a radio access network function, or a radio access network element. The access network device 12 may include a base station, a WLAN access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. As long as the same technical effect is achieved, the base station is not limited to specific technical terms. It should be noted that in the embodiments of this application, only a base station in an NR system is used as an example for description, but a specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), or the like. It should be noted that in the embodiments of this application, only a core network device in the NR system is used as an example for description, but a specific type of the core network device is not limited.

The following describes some concepts and/or terms related to a network element registration method and apparatus, a model request method and apparatus, a network element, a communication system, and a storage medium provided in the embodiments of this application.

### 1. Artificial intelligence (Artificial Intelligence, AI) and AI model

Currently, artificial intelligence is widely applied in various fields. There are many algorithms to implement an AI model, such as a neural network, a decision tree, a support vector machine, and a Bayesian classifier. This application uses the neural network as an example for description, but a specific type of the AI module is not limited.

FIG. 2 is a schematic diagram of a neural network. X1, X2, ..., Xn are input values, Y is an output result, and each ○ represents a neuron, which is also a place in which an operation is performed, and the result continues to be transferred to a next layer. An input layer, a hidden layer, and an output layer that are formed by these numerous neurons are a neural network. A quantity of hidden layers and a quantity of neurons in each layer are a "network structure" of the neural network.

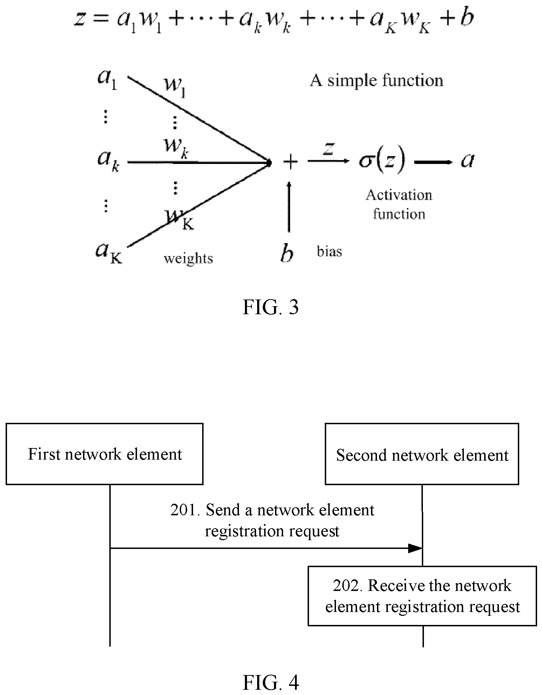

The neural network is composed of neurons, as shown in FIG. 3, which is a schematic diagram of a neuron, where a1, a2, ..., aK (that is, the foregoing X1, ..., Xn) are inputs, w is a weight (multiplicative coefficient), b is a bias (additive coefficient), σ(z) is an activation function, and z is an output value. Common activation functions include Sigmoid, tanh, ReLU (Rectified Linear Unit, linear rectification function, rectified linear unit), and the like. A combination of parameter information of each neuron and an algorithm used is "parameter information" of the entire network, and is also an important part of an AI model file.

In an actual use process, an AI model refers to a file including elements such as a network structure and parameter information. A trained AI model may be directly reused by its framework platform without repeated construction or learning, and may directly perform intelligent functions such as determining and recognition.

### 2. Network framework

There are many implementation frameworks for the neural network, including TensorFlow, PyTorch, Keras, MXNet, Caffe2, and the like. Each framework has different focuses. For example, Caffe2 and Keras are high-level deep learning frameworks that can quickly verify models, while TensorFlow and PyTorch are low-level deep learning frameworks that can modify bottom details of the neural network.

For another example, PyTorch focuses on supporting a dynamic graph model, TensorFlow focuses on supporting various hardware and running fast, and Caffe2 focuses on light weight. Each implementation framework uses its own method to describe the neural network and complete network construction, training, inference, and other operations. Generally, description methods of models in different implementation frameworks cannot be understood by other frameworks, resulting in inability of interoperation between their models.

3. A network data analytics function (Network Data Analytics Function, NWDAF) network element may be divided into two parts: NWDAF (AnLF) and NWDAF (MTLF). The former is a network element (Analytics Logical Function, AnLF) responsible for an inference function and the latter is a network element (Model Training Logical Function, MTLF) responsible for a training function.

A network element registration method and a model request method provided in the embodiments of this application are hereinafter described in detail by using some embodiments and application scenarios thereof with reference to the accompanying drawings.

Currently, frameworks of AI platforms are independent of each other, and only a few models generated therein can be mutually transformed, resulting in inability of interoperation between their models. As a result, the models cannot be used in other frameworks, and practical use is greatly hindered. Because each framework has different focuses and even supported development languages are different, information of an AI model cannot be transferred between two nodes using different frameworks. Because two nodes using different frameworks have different network description methods, different data compression methods, and different file storage formats, network models trained in other frameworks cannot be parsed. Similarly, different developers have different definitions and descriptions of frameworks, and there are high barriers between the frameworks, making it difficult to implement mutual conversion. Even in a same framework, different versions and other information may also cause different file storage formats. When the AI model is transferred between two nodes with different framework versions, there may be a deviation in a parsing result or parsing cannot be performed.

In an existing protocol standard, for registration and discovery of a network element, it is specified that only identification information of the network element and service and partial capability information (NWDAF Capabilities; Analytics aggregation capability; Analytics metadata provisioning capability) requirements are required, but information required for model transfer is not included in a registration and discovery procedure in the standard.

In the embodiments of this application, information for model transfer is added in a registration and discovery process of an intelligent network element, and information about a model platform/framework used by the intelligent network element is additionally registered during registration. During network element discovery, such messages may also be used for screening to select an appropriate network element.

Specifically, in a solution, an MTLF network element may register network element information of the MTLF network element to an NRF network element by using a network element registration request, to register the MTLF network element to the NRF network element. Because the network element registration information of the MTLF network element includes model training related capability information, other network elements can discover, through the NRF network element, the MTLF network element meeting a model training requirement, to resolve a problem of how the MTLF network element registers the network element information to the NRF network element and can be discovered by the other network elements.

In another solution, an NRF network element may register network element information of an MTLF network element to the NRF network element by receiving a network element registration request sent by the MTLF network element, to register the MTLF network element to the NRF network element. Because the network element registration information of the MTLF network element includes model training related capability information, other network elements can discover, through the NRF network element, the MTLF network element meeting a model training requirement, to resolve a problem of how the MTLF network element registers the network element information to the NRF network element and can be discovered by the other network elements.

In still another solution, an AnLF network element may request to obtain a model from an MTLF network element by using a model request. Because the model request includes second information, the AnLF network element can obtain, from the MTLF network element, information of a model matching the second information. Therefore, a success rate of model transfer is increased.

In yet another solution, an MTLF network element may receive a model request sent by an AnLF network element. Because the model request includes second information, the AnLF network element can obtain, from the MTLF network element, information of a model matching the second information. Therefore, a success rate of model transfer is increased.

An embodiment of this application provides a network element registration method. FIG. 4 is a flowchart of a network element registration method according to an embodiment of this application. As shown in FIG. 4, the network element registration method provided in this embodiment of this application may include the following step 201 and step 202.

Step 201: A first network element sends a network element registration request to a second network element.

In this embodiment of this application, the network element registration request is used to register information of the first network element to the second network element, and the information of the first network element includes model training related capability information of the first network element.

Step 202: The second network element receives the network element registration request sent by the first network element.

In this embodiment of this application, the model training related capability information of the first network element includes at least one of the following:
model platform information supported by the first network element;
model description method information supported by the first network element;
vendor information of the first network element;
network element object information for which a model of the first network element can be shared;
first indication information, where the first indication information is used to indicate whether the first network element supports model sharing or model interoperation with other network elements;
model accuracy information reachable by the first network element; and
model training speed information of the first network element.

Optionally, in this embodiment of this application, the first network element is a model training network element, and the network element may be an MTLF network element, an NWDAF network element, or an NWDAF containing MTLF network element.

Optionally, in this embodiment of this application, the second network element is a network element responsible for capability storage, and the network element may be an NRF network element, a UDM network element, or a data collection application function (Data Collection Application Function, DCAF) network element.

Optionally, in this embodiment of this application, the first network element may send an Nnrf_NFManagement_ NFRegister Register network element registration request to the second network element to request to register the information of the first network element to the second network element.

In this embodiment of this application, the model platform information supported by the first network element is used to indicate a platform that the network element can understand and use, such as TensorFlow or PyTorch.

Optionally, in this embodiment of this application, the first network element may train the model based on the model platform, or the model is obtained through training based on the model platform.

Optionally, in this embodiment of this application, the model platform information supported by the first network element includes name or address information of one or more model platforms.

In this embodiment of this application, the model platform information is used to instruct the first network element to generate the model by performing training based on the model platform corresponding to the name or address information of the model platform.

In this embodiment of this application, the model description method information supported by the first network element is used to indicate a method and technology used by the network element to describe the model.

Optionally, in this embodiment of this application, the model description method information supported by the first network element is either of the following: model format information and model language information.

Optionally, in this embodiment of this application, the model language information may be an open neural network exchange (Open Neural Network Exchange, ONNX) language.

Optionally, in this embodiment of this application, the first network element supports expressing a trained model by using the model format information or the model language information.

Optionally, in this embodiment of this application, the model accuracy information reachable by the first network element is used to indicate recognition or decision accuracy that can be reached after the model described by the first network element is trained.

In this embodiment of this application, model accuracy is used to indicate accuracy of an output result of the model.

In this embodiment of this application, the model accuracy information may be the number of times the model decision results are correct, divided by the total number of decisions, that is, Model accuracy = Number of correct results ÷ Total number of decisions.

Optionally, in this embodiment of this application, the model accuracy information may be identified in decimal, percentage, or high, medium, and low forms.

Optionally, in this embodiment of this application, the model training speed information of the first network element may be a time required for the first network element to obtain a model with specific accuracy after training. For example, if the first network element needs to train a model and it needs to take two hours to reach 90% accuracy, the time represents speed information of the model training of the first network element.

Optionally, in this embodiment of this application, "the first indication information indicates that the first network element supports model sharing or model interoperation with other network elements" may be understood as "the first network element has a capability of model sharing or model interoperation with other network elements".

Optionally, in this embodiment of this application, the information of the first network element further includes at least one of the following:
algorithm information for model training used by the first network element;
vendor information of the first network element;
network element object information for which the model of the first network element can be shared;
constraint condition information for sharing a model by the first network element; and
network element information for storing the model trained by the first network element.

Optionally, in this embodiment of this application, the algorithm information for model training used by the first network element may be an AI-related algorithm type such as machine learning supported by the first network element during model training, for example, deep learning, linear regression, or gradient descent, and the model supported by the first network element can be obtained by using the algorithm information.

Optionally, in this embodiment of this application, the vendor information of the first network element is used to indicate information of a vendor to which the network element belongs.

In this embodiment of this application, the network element object information for which the model of the first network element can be shared is used to indicate network element object information defined by the network element itself during model sharing and model transfer.

Optionally, in this embodiment of this application, the network element object information for which the model of the first network element can be shared includes at least one of the following: information of one or more model inference function network elements and information of one or more model training function network elements.

Optionally, in this embodiment of this application, the network element object information is description information or identification information of the network element object.

Optionally, in this embodiment of this application, the constraint condition information for sharing a model by the first network element includes at least one of the following: time constraint condition information and area constraint condition information.

In this embodiment of this application, the time constraint condition information is used to indicate a time when the first network element is allowed to share the model. for example, from 7:00 p.m. to 6:00 a.m. the next day.

The area constraint condition information is used to indicate an area in which the first network element is allowed to share the model. For example, a location of a network element sharing the model with the first network element should be within the area constraint information.

In this embodiment of this application, the network element information for storing the model trained by the first network element is used to indicate a network element for storing the model trained by the first network element.

Optionally, in this embodiment of this application, the network element information for storing the model trained by the first network element may be identification information, network element type information, and the like of a network element responsible for storing model information, for example, a network element (Analytics Data Repository Function, ADRF) responsible for storing the model.

Optionally, in this embodiment of this application, the information of the first network element further includes at least one of the following: version information of the first network element, type information of the first network element, identification information of the first network element, and data analytics identification information supported by the first network element.

In this embodiment of this application, the version information of the first network element is used to indicate version information of the model used by the network element.

In this embodiment of this application, the type information of the first network element is used to indicate which type of network element is registered this time. For example, the type information of the first network element is an NWDAF network element type, indicating that the network element registered this time is an NWDAF network element.

Optionally, in this embodiment of this application, the identification information of the first network element may be any one of the following: fully qualified domain name (Fully Qualified Domain Name, FQDN) information and IP address information.

In this embodiment of this application, the fully qualified domain name information is used to indicate a location of the first network element and connect the first network element.

In this embodiment of this application, the data analytics identification information supported by the first network element is used to indicate a type of task that the network element can perform.

Optionally, in this embodiment of this application, the information of the first network element further includes at least one of the following: type information of training supported by the first network element, time information of federal learning training supported by the first network element, and metadata information of the first network element.

In this embodiment of this application, the type information of training supported by the first network element is used to indicate a type of AI model training algorithm supported by the first network element.

Optionally, in this embodiment of this application, the type information of training supported by the first network element includes at least one of the following: indication information of whether the first network element supports federal learning training, a horizontal federal learning training type, a vertical federal learning training type, deep learning, linear regression, and gradient descent.

In this embodiment of this application, the time information of federal learning training supported by the first network element is used to indicate a time of federal learning training supported by the first network element, and the federal learning training can be well performed in this time period, for example, from 10:00 p.m. to 6:00 a.m. the next day.

In this embodiment of this application, the metadata information of the first network element is used to indicate data information that can be covered, obtained, and provided by the first network element.

Optionally, in this embodiment of this application, the metadata information of the first network element includes at least one of the following: an input data type, an output data type, a data amount, and a data range.

In this embodiment of this application, the input data type refers to an input data type of federal learning training, and the output data type refers to an output data type of federal learning training.

In this embodiment of this application, the data type refers to whether data in an area has obvious characteristics, such as convergent in the morning and divergent at night.

In this embodiment of this application, the data range refers to a service range of the first network element.

Optionally, in this embodiment of this application, the data range includes at least one of the following: a service area of the first network element, an area in which the first network element can collect data, and an object from which the first network element can collect data.

Optionally, in this embodiment of this application, the data that can be collected by the first network element includes metadata information and training data for model training.

Optionally, in this embodiment of this application, the area in which the first network element can collect data may be any one of the following: the service area of the first network element, a sub-area range in the service area of the first network element, and a finer-grained object with data (for example, a UE list) that can be collected.

Optionally, in this embodiment of this application, after the foregoing step 202, the method further includes the following step 203 and step 204.

Step 203: The second network element sends a registration response to the first network element.

In this embodiment of this application, the registration response is used to indicate that the first network element is registered successfully.

Step 204: The first network element receives the registration response sent by the second network element.

Optionally, in this embodiment of this application, the second network element may send an Nnrf_NFManagement_NFRegister response registration response to the first network element to notify the first network element that the registration is successful.

According to the network element registration method provided in this embodiment of this application, the first network element may register the network element information of the first network element to the second network element by using the network element registration request, to register the first network element to the second network element. Because the network element registration information of the first network element includes the model training related capability information, other network elements can discover, through the second network element, the first network element meeting a model training requirement, to resolve a problem of how the first network element registers the network element information to the second network element and can be discovered by the other network elements.

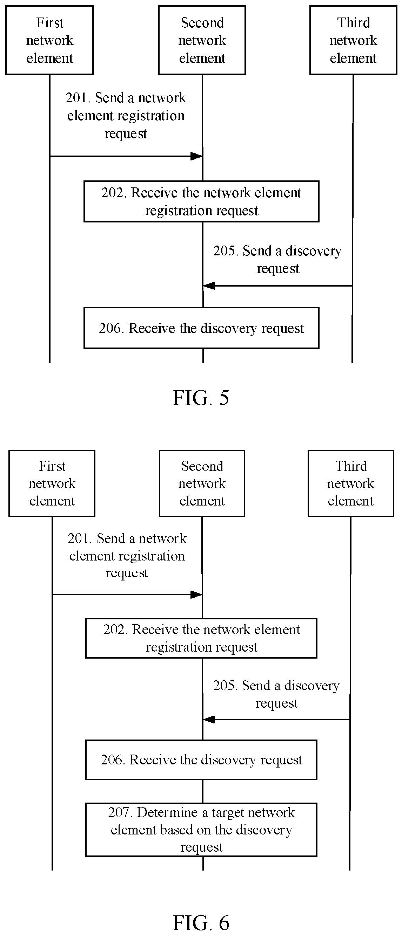

Optionally, in this embodiment of this application, with reference to FIG. 4, as shown in FIG. 5, after the foregoing step 202, the network element registration method provided in this embodiment of this application further includes the following step 205 and step 206.

Step 205: A third network element sends a discovery request to the second network element.

In this embodiment of this application, the discovery request is used to request to discover a target network element, and the discovery request includes at least one of the following: model training related capability information required by the third network element and first information.

Step 206: The second network element receives the discovery request sent by the third network element.

In this embodiment of this application, the model training related capability information required by the third network element includes at least one of the following: model platform information supported by the target network element as required by the third network element, model description method information supported by the target network element as required by the third network element, model accuracy information reachable by the target network element as required by the third network element, and model training speed information of the target network element as required by the third network element.

Optionally, in this embodiment of this application, the third network element may be an AnLF network element, an NWDAF network element, or an NWDAF containing AnLF network element.

Optionally, in this embodiment of this application, the third network element may send an Nnrf_NFDiscovery_Request discovery request to the second network element to request the second network element to feed back network element information meeting the condition.

In this embodiment of this application, the model platform information supported by the target network element as required by the third network element is used to indicate a platform that the required target network element can understand and use, such as TensorFlow or PyTorch.

Optionally, in this embodiment of this application, the target network element may train the model based on the model platform, or the model is obtained through training based on the model platform.

Optionally, in this embodiment of this application, the model platform information supported by the target network element includes name or address information of one or more model platforms.

In this embodiment of this application, the model platform information is used to instruct the target network element to generate the model by performing training based on the model platform corresponding to the name or address information of the model platform.

In this embodiment of this application, the model description method information supported by the target network element as required by the third network element is used to indicate a method and technology used by the required target network element to describe the model.

Optionally, in this embodiment of this application, the model accuracy information reachable by the target network element as required by the third network element is used to indicate recognition or decision accuracy that can be reached after the model described by the required target network element is trained.

In this embodiment of this application, model accuracy is used to indicate accuracy of an output result of the model.

Optionally, in this embodiment of this application, the model training speed information of the target network element as required by the third network element may be a time required for the required target network element to obtain a model with specific accuracy after training.

Optionally, in this embodiment of this application, the discovery request further includes data analytics identification information of the target network element as required by the third network element.

Optionally, in this embodiment of this application, the data analytics identification information of the target network element as required by the third network element is used to indicate a type of task that the required target network element can support.

Optionally, in this embodiment of this application, with reference to FIG. 5, as shown in FIG. 6, after the foregoing step 206, the network element registration method provided in this embodiment of this application further includes the following step 207.

Step 207: The second network element determines the target network element based on the discovery request.

Optionally, model training related capability information of the target network element matches the model training related capability information required by the third network element.

It may be understood that the second network element determines that a network element whose model training related capability information matches the model training related capability information required by the third network element is the target network element.

Optionally, in a case that the discovery request includes the model training related capability information required by the third network element, the foregoing step 207 may be specifically implemented by at least one of the following step 207a to step 207d.

Step 207a: The second network element determines the target network element based on the model platform information supported by the target network element as required by the third network element.

In this embodiment of this application, the target network element supports the model platform information required by the third network element.

It may be understood that the second network element determines that a network element supporting the model platform information required by the third network element is the target network element.

Step 207b: The second network element determines the target network element based on the model description method information supported by the target network element as required by the third network element.

In this embodiment of this application, the target network element supports the model description method information required by the third network element.

It may be understood that the second network element determines that a network element supporting the model description method information required by the third network element is the target network element.

Step 207c: The second network element determines the target network element based on the model accuracy information reachable by the target network element as required by the third network element.

In this embodiment of this application, the target network element supports the reachable model accuracy information required by the third network element.

It may be understood that the second network element determines that a network element supporting the reachable model accuracy information required by the third network element is the target network element.

Step 207d: The second network element determines the target network element based on the model training speed information of the target network element as required by the third network element.

In this embodiment of this application, the target network element supports the model training speed information required by the third network element.

It may be understood that the second network element determines that a network element supporting the model training speed information required by the third network element is the target network element.

Optionally, in this embodiment of this application, the first information includes at least one of the following: algorithm information for model training used by the target network element as required by the third network element, vendor information of the target network element as required by the third network element, constraint condition information for sharing a model by the target network element as required by the third network element, identification information of the third network element, and indication for model sharing.

Optionally, in this embodiment of this application, the algorithm information for model training used by the target network element as required by the third network element may be an AI-related algorithm type such as machine learning supported by the target network element during model training, for example, deep learning, linear regression, or gradient descent, and the model supported by the first network element can be obtained by using the algorithm information.

Optionally, in this embodiment of this application, the vendor information of the target network element as required by the third network element is used to indicate information of a vendor to which the required target network element belongs.

Optionally, in this embodiment of this application, the constraint condition information for sharing a model by the target network element as required by the third network element includes at least one of the following: time information supported by the target network element and area constraint information of the target network element.

In an implementation, the time information supported by the target network element as required by the third network element indicate a time when the required target network element is allowed to share the model; and the area constraint information of the target network element as required by the third network element is used to indicate an area in which the required target network element is allowed to share the model.

Optionally, in this embodiment of this application, the indication information for model sharing is used to indicate that the network element required by the third network element is a network element that supports model sharing or model interoperation with other network elements.

Optionally, the second network element determines the target network element based on the first information in the discovery request.

Optionally, in this embodiment of this application, in a case that the discovery request includes the first information, the foregoing step 207 may be specifically implemented by at least one of the following step 207e to step 207i.

Step 207e: The second network element determines the target network element based on the algorithm information used for model training by the target network element as required by the third network element.

In this embodiment of this application, the target network element supports the algorithm information used for model training as required by the third network element.

It may be understood that the second network element determines that a network element supporting the algorithm information used for model training as required by the third network element is the target network element.

Step 207f: The second network element determines the target network element based on the vendor information of the target network element as required by the third network element.

In this embodiment of this application, the target network element supports the vendor information required by the third network element.

It may be understood that the second network element determines that a network element supporting the vendor information required by the third network element is the target network element.

Step 207g: The second network element determines the target network element based on the constraint condition information for sharing a model by the target network element as required by the third network element. Step 207h: The second network element determines the target network element based on the identification information of the third network element, where network element object information for which the model of the target network element can be shared matches the identification information of the third network element. It may be understood that "network element object information for which the model of the target network element can be shared matches the identification information of the third network element" may mean that the network element object information for which the model of the target network element can be shared includes the identification information of the third network element.

Step 207i: The second network element determines the target network element based on the indication information for model sharing, where the target network element supports model sharing or model interoperation with other network elements.

In this embodiment of this application, the target network element supports the constraint condition information for sharing a model as required by the third network element.

It may be understood that the second network element determines that a network element supporting the constraint condition information for sharing a model as required by the third network element is the target network element.

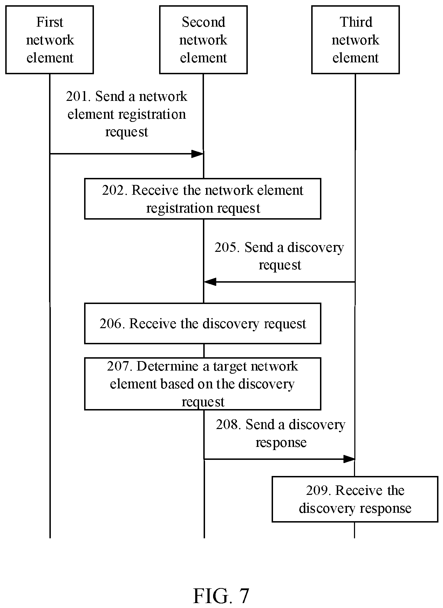

Optionally, in this embodiment of this application, with reference to FIG. 6, as shown in FIG. 7, after the foregoing step 207, the network element registration method provided in this embodiment of this application further includes the following step 208 and step 209.

Step 208: The second network element sends a discovery response to the third network element.

In this embodiment of this application, the discovery response includes target information.

Step 209: The third network element receives the discovery response sent by the second network element.

In this embodiment of this application, the target information includes at least one of the following: identification information of the target network element, address information of the target network element, the model platform information supported by the target network element, the model description method information supported by the target network element, the model accuracy information reachable by the target network element, the model training speed information of the target network element, the algorithm information for model training used by the target network element, the vendor information of the target network element, the constraint condition information for sharing a model by the target network element, and network element information for storing the model trained by the target network element.

Optionally, in this embodiment of this application, the target information further includes at least one of the following: a query validity period and version information of the target network element.

It should be noted that, for the description of the information of the target network element, reference may be made to the description in the foregoing embodiment. Details are not described herein again.

According to the network element registration method provided in this embodiment of this application, the second network element may receive the discovery request sent by the third network element, to determine the target network element based on the discovery request, and then may send the discovery response to the third network element, so that the third network element can determine the target network element and can subsequently request to obtain the model from the target network element.

It should be noted that the network element registration method provided in this embodiment of this application may also be performed by a network element registration apparatus, or a control module for performing the network element registration method in a network element registration apparatus.

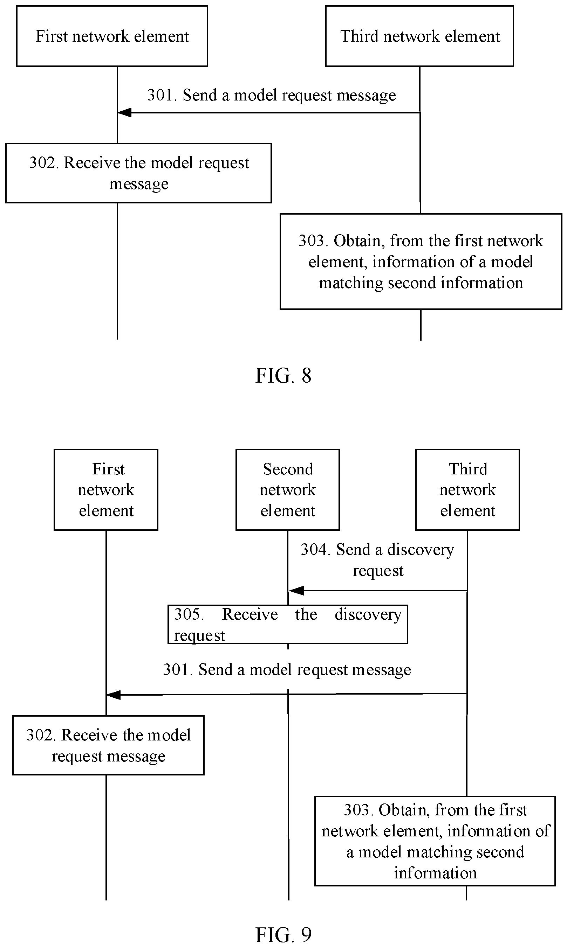

An embodiment of this application provides a model request method. FIG. 8 is a flowchart of a model request method according to an embodiment of this application. As shown in FIG. 8, the model request method provided in this embodiment of this application may include the following step 301 to step 303.

Step 301: A third network element sends a model request message to a first network element.

In this embodiment of this application, the model request message is used to request to obtain a model.

Step 302: The first network element receives the model request message sent by the third network element.

In this embodiment of this application, the model request message includes second information, and the second information includes at least one of the following: model platform information, model description method information, model accuracy information, vendor information of the third network element, and identification information of the third network element.

In this embodiment of this application, the second information is used by the third network element to obtain, from the first network element, information of a model matching the second information.

Optionally, in this embodiment of this application, the first network element is a model training network element, and the network element may be an MTLF network element, an NWDAF network element, or an NWDAF containing MTLF network element.

Optionally, in this embodiment of this application, the third network element may be an AnLF network element, an NWDAF network element, or an NWDAF containing AnLF network element.

Optionally, in this embodiment of this application, the third network element may send an Nnwdaf_MLModelInfo_Request model request to the first network element, to request to obtain the model.

Optionally, in this embodiment of this application, the model platform information is used to indicate a platform that a required network element can understand and use, such as TensorFlow or PyTorch.

Optionally, in this embodiment of this application, the first network element may train the model based on the model platform, or the model is obtained through training based on the model platform.

Optionally, in this embodiment of this application, the model platform information supported by the first network element includes name or address information of one or more model platforms.

In this embodiment of this application, the model platform information is used to instruct the first network element to generate the model by performing training based on the model platform corresponding to the name or address information of the model platform.

In this embodiment of this application, the model description method information is used to indicate a method and technology used by the required network element to describe the model.

Optionally, in this embodiment of this application, the model description method information is either of the following: model format information and model language information.

In this embodiment of this application, the model description method information is used to instruct the first network element to feed back the model to the third network element by using the model format information or the model language information.

Optionally, in this embodiment of this application, the model language information may be an ONNX (a universal model description language) language.

In this embodiment of this application, the model accuracy information is used to indicate recognition or decision accuracy that can be reached after the model described by the required network element is trained.

In this embodiment of this application, model accuracy is used to indicate accuracy of an output result of the model.

In this embodiment of this application, the model accuracy information may be the number of times the model decision results are correct, divided by the total number of decisions, that is, Model accuracy = Number of correct results ÷ Total number of decisions.

Optionally, in this embodiment of this application, the model accuracy information may be identified in decimal, percentage, or high, medium, and low forms.

In this embodiment of this application, the model request method further includes: the first network element obtains, based on the second information, the information of the model matching the second information.

Optionally, that the first network element obtains, based on the second information, the information of the model matching the second information includes at least one of the following:
the first network element obtains a target model based on the model platform information included in the second information, where the target model is generated based on a model platform corresponding to the model platform information; and
the first network element obtains a target model based on the model description method information included in the second information, where the target model is expressed based on the model language information or model format information corresponding to the model description method information.

The first network element obtains the target model based on the model accuracy information included in the second information, where model accuracy of the target model matches the model accuracy information. Optionally, that model accuracy of the target model matches the model accuracy information may mean that the model accuracy of the target model is the same as that indicated by the model accuracy information, or that the model accuracy of the target model is within a model accuracy range indicated by the model accuracy information, or that the model accuracy of the target model is higher than that indicated by the model accuracy information. This is not specifically limited in this embodiment. In this embodiment of this application, the first network element may determine, based on the vendor information of the third network element included in the second information, that the first network element allows model sharing or model interoperation with the third network element, where "the first network element allows model sharing or model interoperation with the third network element" may be understood as "the vendor information of the third network element is included in a range of vendor information of the first network element that allows model sharing or model interoperation";
or
in this embodiment of this application, the first network element determines, based on the identification information of the third network element included in the second information, that the first network element allows model sharing or model interoperation with the third network element, where "the first network element allows model sharing or model interoperation with the third network element" may be understood as "the third network element is within a range of network elements that can share the model of the first network element.

According to the model request method provided in this embodiment of this application, the third network element may request to obtain the model from the first network element by using the model request. Because the model request includes the second information, the third network element can obtain, from the first network element, the information of the model matching the second information. Therefore, a success rate of model transfer is increased.

Step 303: The third network element obtains, from the first network element, the information of the model matching the second information.

Optionally, in this embodiment of this application, the information of the model includes at least one of the following: file information of the model and download address information of a model file.

Optionally, in this embodiment of this application, the file information of the model may include elements such as a complete network structure and parameter information for generating a model corresponding to a target task.

Optionally, in this embodiment of this application, the second information further includes at least one of the following:
algorithm information used for training the model;
version information of the model; and
feedback time information of the model

In this embodiment of this application, the algorithm information used for training the model is used to indicate an AI-related algorithm type such as machine learning supported by the required network element during model training, and the model supported by the network element can be obtained by using the algorithm information.

In this embodiment of this application, the version information of the model is used to indicate version information of the model used by the required network element.

In this embodiment of this application, the feedback time information of the model is used to indicate a feedback time of the model trained by the required network element, for example, a time spent on model training or a deadline for model feedback.

In this embodiment of this application, that the first network element obtains, based on the second information, the information of the model matching the second information includes at least one of the following: the first network element obtains a target model based on the algorithm information used for training the model, where an algorithm type used by the target model is the same as the algorithm type indicated by the algorithm information used for training the model;
the first network element obtains a target model based on the version information of the model, where version information of the target model is the same as the version information of the model; and
the first network element obtains a target model based on the feedback time information of the model, where a feedback time of the target model matches the feedback time indicated by the feedback time information of the model. For example, a time spent on model training of the target model is shorter than the time spent on model training indicated by the feedback time information of the model.

Optionally, in this embodiment of this application, the second information further includes at least one of the following: data analytics identification information and model constraint condition information.

Optionally, in this embodiment of this application, the data analytics identification information is used to indicate a type of task performed by the required network element.

Optionally, in this embodiment of this application, the model constraint condition information includes at least one of the following: time constraint condition information and area constraint condition information.

In this embodiment of this application, the time constraint condition information is used to indicate a time when the required network element is allowed to share the model, for example, from 7:00 p.m. to 6:00 a.m. the next day.

The area constraint condition information is used to indicate an area in which the first network element is allowed to share the model. For example, a location of a network element sharing the model with the first network element should be within the area constraint information. In other words, this area defines a specific area in which other network elements can obtain the model from the first network element, such as "Suzhou".

According to the model request method provided in this embodiment of this application, the third network element may request to obtain the model from the first network element by using the model request. Because the model request includes the second information, the third network element can obtain, from the first network element, the information of the model matching the second information. Therefore, the success rate of model transfer is increased.

Optionally, in this embodiment of this application, with reference to FIG. 8, as shown in FIG. 9, before the foregoing step 301, the model request method provided in this embodiment of this application further includes the following step 304 and step 305.

Step 304: The third network element sends a discovery request to a second network element.

In this embodiment of this application, the discovery request is used to request to discover a target network element, and the discovery request includes at least one of the following: model training related capability information required by the third network element and first information.

Step 305: The second network element receives the discovery request sent by the third network element.

In this embodiment of this application, the model training related capability information required by the third network element includes at least one of the following: model platform information supported by the target network element as required by the third network element, model description method information supported by the target network element as required by the third network element, model accuracy information reachable by the target network element as required by the third network element, and model training speed information of the target network element as required by the third network element.

Optionally, in this embodiment of this application, the third network element may send an Nnrf_NFDiscovery_Request discovery request to the second network element to request the second network element to feed back network element information meeting the condition.

In this embodiment of this application, the model platform information supported by the target network element as required by the third network element is used to indicate a platform that the required target network element can understand and use, such as TensorFlow or PyTorch.

In this embodiment of this application, the model description method information supported by the target network element as required by the third network element is used to indicate a method and technology used by the required target network element to describe a model.

Optionally, in this embodiment of this application, the model platform information supported by the target network element includes name or address information of one or more model platforms.

In this embodiment of this application, the model platform information is used to instruct the target network element to generate the model by performing training based on the model platform corresponding to the name or address information of the model platform.

Optionally, in this embodiment of this application, the model accuracy information reachable by the target network element as required by the third network element is used to indicate recognition or decision accuracy that can be reached after the model described by the required target network element is trained.

Optionally, in this embodiment of this application, the model training speed information of the target network element as required by the third network element may be a time required for the required target network element to obtain a model with specific accuracy after training.

Optionally, in this embodiment of this application, the discovery request further includes data analytics identification information of the target network element as required by the third network element.

Optionally, in this embodiment of this application, the data analytics identification information of the target network element as required by the third network element is used to indicate a type of task that the required target network element can support.

Optionally, in this embodiment of this application, the first information includes at least one of the following: algorithm information for model training used by the target network element as required by the third network element, vendor information of the target network element as required by the third network element, constraint condition information for sharing a model by the target network element as required by the third network element, identification information of the third network element, and indication for model sharing.

Optionally, in this embodiment of this application, the algorithm information for model training used by the target network element as required by the third network element may be an AI-related algorithm type such as machine learning supported by the target network element during model training, for example, deep learning, linear regression, or gradient descent, and a model supported by the target network element can be obtained by using the algorithm information.

Optionally, in this embodiment of this application, the vendor information of the target network element as required by the third network element is used to indicate information of a vendor to which the required target network element belongs.

Optionally, in this embodiment of this application, the constraint condition information for sharing a model by the target network element as required by the third network element includes at least one of the following: time information supported by the target network element and area constraint information of the target network element.

In this embodiment of this application, the time information supported by the target network element as required by the third network element is used to indicate a time when the required target network element is allowed to share the model; and the area constraint information of the target network element as required by the third network element is used to indicate an area in which the required target network element is allowed to share the model.

Optionally, in this embodiment of this application, the indication information for model sharing is used to indicate that the network element required by the third network element is a network element that supports model sharing or model interoperation with other network elements.

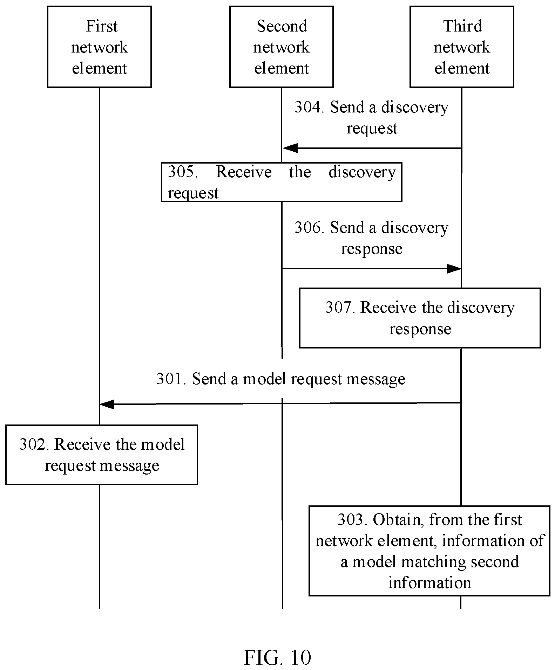

Optionally, in this embodiment of this application, with reference to FIG. 9, as shown in FIG. 10, after the foregoing step 305, the model request method provided in this embodiment of this application further includes the following step 306 and step 307.

Step 306: The second network element sends a discovery response to the third network element.

In this embodiment of this application, the discovery response includes target information.

Step 307: The third network element receives the discovery response sent by the second network element.

In this embodiment of this application, the target information includes at least one of the following: identification information of the target network element, address information of the target network element, the model platform information supported by the target network element, the model description method information supported by the target network element, the model accuracy information reachable by the target network element, the model training speed information of the target network element, the algorithm information for model training used by the target network element, the vendor information of the target network element, the constraint condition information for sharing a model by the target network element, and network element information for storing the model trained by the target network element.

Optionally, in this embodiment of this application, the identification information of the target network element may be any one of the following: fully qualified domain name (Fully Qualified Domain Name, FQDN) information and IP address information.

In this embodiment of this application, the model platform information supported by the target network element is used to indicate a platform that the network element can understand and use, such as TensorFlow or PyTorch.

Optionally, in this embodiment of this application, the target network element may train the model based on the model platform, or the model is obtained through training based on the model platform.

In this embodiment of this application, the model description method information supported by the target network element is used to indicate a method and technology used by the network element to describe the model.

Optionally, in this embodiment of this application, the model description method information supported by the target network element is either of the following: model format information and model language information.

Optionally, in this embodiment of this application, the model language information may be an ONNX (a universal model description language) language.

Optionally, in this embodiment of this application, the target network element supports expressing the trained model by using the model format information or the model language information.

Optionally, in this embodiment of this application, the model accuracy information reachable by the target network element is used to indicate recognition or decision accuracy that can be reached after the model described by the target network element is trained.

In this embodiment of this application, the model accuracy information may be the number of times the model decision results are correct, divided by the total number of decisions, that is, Model accuracy = Number of correct results ÷ Total number of decisions.

Optionally, in this embodiment of this application, the model accuracy information may be identified in decimal, percentage, or high, medium, and low forms.

Optionally, in this embodiment of this application, the model training speed information of the target network element may be a time required for the target network element to obtain a model with specific accuracy after training. For example, if the target network element needs to train a model and it needs to take two hours to reach 90% accuracy, the time represents speed information of the model training of the target network element.

Optionally, in this embodiment of this application, the algorithm information for model training used by the target network element may be an AI-related algorithm type such as machine learning supported by the target network element during model training, for example, deep learning, linear regression, or gradient descent, and the model supported by the target network element can be obtained by using the algorithm information.

Optionally, in this embodiment of this application, the vendor information of the target network element is used to indicate information of a vendor to which the network element belongs.

In this embodiment of this application, the network element object information for which the model of the target network element can be shared is used to indicate network element object information defined by the network element itself during model sharing and model transfer.

Optionally, in this embodiment of this application, the network element object information for which the model of the target network element can be shared includes at least one of the following: information of one or more model inference function network elements and information of one or more model training function network elements.

Optionally, in this embodiment of this application, the constraint condition information for sharing a model by the target network element includes at least one of the following: time constraint condition information and area constraint condition information.

In this embodiment of this application, the time constraint condition information is used to indicate a time when the target network element is allowed to share the model, for example, from 7:00 p.m. to 6:00 a.m. the next day. The area constraint condition information is used to indicate an area in which the first network element is allowed to share the model. For example, a location of a network element sharing the model with the first network element should be within the area constraint information, such as "Suzhou".

In this embodiment of this application, the network element information for storing the model trained by the first network element is used to indicate a network element for storing the model trained by the first network element.

Optionally, in this embodiment of this application, the network element information for storing the model trained by the first network element may be identification information, network element type information, and the like of a network element responsible for storing model information, for example, an ADRF network element.

According to the model request method provided in this embodiment of this application, the third network element may send the discovery request to the second network element to discover the target network element. Because the discovery request includes the model training related capability information required by the third network element, the second network element can quickly and accurately discover the target network element required by the third network element, and then can request to obtain the model from the target network element by using the model request. Because the model request includes the second information, the third network element can obtain, from the first network element, the information of the model matching the second information. Therefore, the success rate of model transfer is increased.

It should be noted that the model request method provided in this embodiment of this application may be performed by a model request apparatus, or a control module for performing the model request method in a model request apparatus.

Interaction processes of the network element registration method and the model request method provided in the embodiments of this application are hereinafter described in detail by using a specific embodiment.

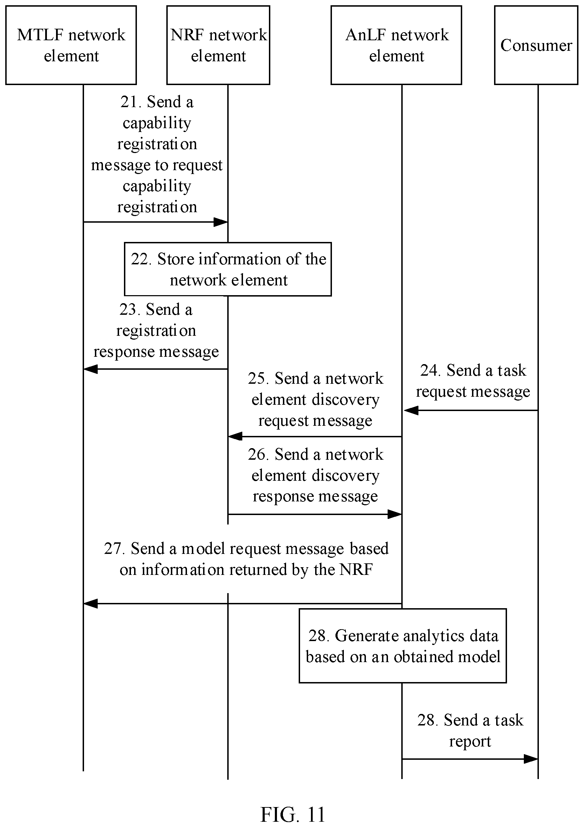

As shown in FIG. 11, a method provided in this embodiment of this application includes the following step 21 to step 28.

Step 21: A model training network element MTLF (or an NWDAF or an NWDAF containing MTLF) sends a network element registration message to an NRF for capability registration.

In this embodiment of this application, the MTLF network element may be registered by using (Nnrf_NFManagement_NFRegister Register).

Step 22: The NRF network element stores information of the MTLF network element.

Step 23: The NRF network element sends a registration response message.

In this embodiment of this application, the NRF network element may notify, by using the response message (Nnrf_NFManagement_NFRegister response), the MTLF network element that the registration is successful.

The foregoing is similar to existing steps, but a difference is as follows:

In step 21, when the MTLF sends a capability registration message to the NRF, the MTLF sends not only its own identification information, a supported analytic ID, and other information, but also "supported training type information", "supported federal learning time", "metadata information", and the like.

Mandatory information for registration is as follows.
1. NF type: a network element type, indicating which type of network element is registered this time, such as NF type = NWDAF type.
2. NF instance ID, FQDN or IP address of NF: identification information of a network element instance, indicating identification information of the network element registered this time, such as FQDN information (Fully Qualified Domain Name, fully qualified domain name, used to indicate a location of the network element and connect the network element) or IP address information (another type of identification information) of the network element.
3. Supported analytic ID information, indicating a type of task that can be performed by the NWDAF network element.

In addition, the network element registration information further needs to include model training capability information and at least one of the following information:
Training capability information:
4. Supported model platform information, indicating a platform that the network element can understand and use, such as TensorFlow or PyTorch.
5. Supported model description method information, indicating a method and technology used to describe a model, which may be model format information or model language information. For example, a language used to describe the model is ONNX (a universal model description language).
6. Model accuracy information, where accuracy is used to describe recognition or decision accuracy that can be reached after the model is trained. The model accuracy may be the number of times the model decision results are correct, divided by the total number of decisions, that is, Accuracy = Number of correct results ÷ Total number of decisions. The information may be identified in decimal, percentage, or high, medium, and low forms.
7. Model training speed information, which may be a time required for a first network element to obtain a model with specific accuracy after training, for example, may represent a speed of model training by the network element if it needs to take two hours for the network element to train a model and reach 90% accuracy.

### Other information

8. Algorithm information used for model training, that is, an AI-related algorithm type such as machine learning supported during model training, for example, "deep learning", "linear regression", or "gradient descent".

9. Vendor information, which is information of a vendor to which the network element belongs.

10. Version information, which is version information of the model used by the network element.

11. Network element object information for which the model can be shared, indicating network element object information defined by the network element itself during model sharing and model transfer.

12. Network element information for storing the trained model, which may be identification information, network element type information, and the like of a network element responsible for storing model information, for example, an ADRF (Analytics Data Repository Function).

13. Constraint condition information for sharing a model, including:
supported time information, indicating a time when the network element can transfer the model, for example, from 7:00 p.m. to 6:00 a.m. the next day; and
area constraint information, indicating range information of a sharing network element acceptable by the network element. For example, a location of a network element sharing the model with the network element should be within the area constraint information, for example, in "Suzhou".

14. First indication information, where the first indication information is used to indicate whether the model training network element supports model sharing or model interoperation with other network elements.

Step 24: A task consumer (consumer) sends a task request to an AnLF.

Step 25: The AnLF sends a request for discovering an appropriate training network element to the NRF.

Step 26: The NRF sends a network element discovery response message.

In this embodiment of this application, the response message needs to include: 1. a query validity period; 2. identification information of each network element; 3. address information, and the like. The response message may further include:
4. model platform information of the discovered network element;
5. model description method information;
6. model description method information;
7. model accuracy information;
8. model training speed information;
9. algorithm information used for training the model;
10. vendor and version information;
11. network element information for storing the trained model; and
12. constraint information for model sharing.

Step 27: The AnLF initiates a model request to an appropriate network element based on information returned by the NRF.

Step 28: The AnLF generates analytics data by using an obtained model and returns the analytics data to the consumer.

In this embodiment of this application, after using the model requested in step 27, the AnLF generates a task report and returns the task report to the consumer NF, and the AnLF may return the task report to the customer by using Nnwdaf_AnalyticsInfo_Request response.

The foregoing is similar to existing steps, but a difference is as follows:

In step 25, when the AnLF sends a request for discovering an appropriate training network element to the NRF, the AnLF sends a request for discovering a network element, where the request may describe "model platform information" and "required time information" in addition to information such as an analytic ID. The information includes:
1. Mandatory information: the analytic ID, indicating a type of task that a target MTLF can support.
2. Filter info: task model constraint information, used to define task details, such as a target of the model (such as mobility analysis of UE), and target task time.

In this method, the AnLF may further define information about model transfer:
Training capability information
3. Supported model platform information, indicating a platform that the network element can understand and use, such as TensorFlow or PyTorch.
4. Supported model description method information, indicating a method and technology used to describe the model, which may be model format information or model language information.
5. Model accuracy information, where accuracy is used to describe recognition or decision accuracy that can be reached after the model is trained. The model accuracy may be the number of times the model decision results are correct, divided by the total number of decisions, that is, Accuracy = Number of correct results ÷ Total number of decisions. The information may be identified in decimal, percentage, or high, medium, and low forms.
6. Model training speed information, which may be a time required for a first network element to obtain a model with specific accuracy after training, for example, may represent a speed of model training by the network element if it needs to take two hours for the network element to train a model and reach 90% accuracy.

### Other information

7. Algorithm information used for model training, that is, an AI-related algorithm type such as machine learning supported during model training, for example, "deep learning", "linear regression", or "gradient descent".

8. Vendor information, which is information of a vendor to which the network element belongs.

9. Version information, which is version information of the model used by the network element.

10. Network element object information for which the model can be shared, indicating network element object information defined by the network element itself during model sharing and model transfer.

11. Network element information for storing the trained model, which may be identification information, network element type information, and the like of a network element responsible for storing model information, for example, an ADRF (Analytics Data Repository Function).

12. Constraint condition information for sharing a model, including:
supported time information, indicating a time when the network element can transfer the model, for example, from 7:00 p.m. to 6:00 a.m. the next day; and
area constraint information, indicating range information of a sharing network element acceptable by the network element. For example, a location of a network element sharing the model with the network element should be within the area constraint information, for example, in "Suzhou".

Specifically, step 27 may be that the AnLF sends a model request to the MTLF.

In this embodiment of this application, the AnLF may send a model request by using (Nnwdaf_MLMoldelInfo_Request). The request needs to include the analytic ID, ML model filter information, and the like.

It should be noted that, for the related description and beneficial effects in the foregoing step 21 to step 27, reference may be made to the description in the foregoing embodiment. Details are not described herein again.

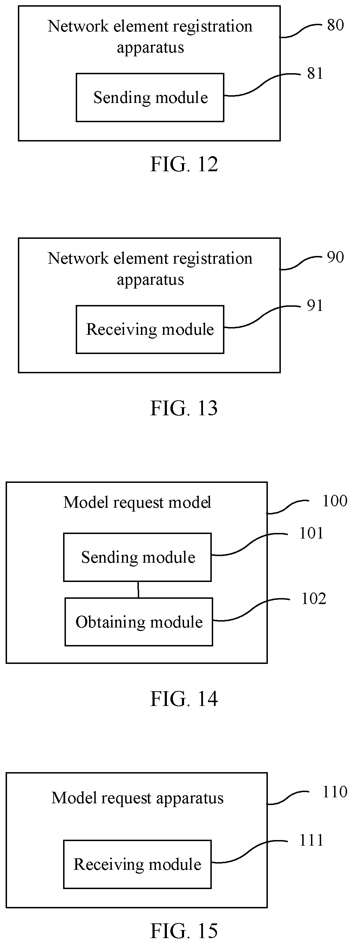

FIG. 12 is a schematic diagram of a possible structure of a network element registration apparatus according to an embodiment of this application. As shown in FIG. 12, the network element registration apparatus 80 may include a sending module 81.

The sending module 81 is configured to send a network element registration request to a second network element, where the network element registration request is used to register information of a first network element to the second network element, and the information of the first network element includes model training related capability information of the first network element, where the model training related capability information of the first network element includes at least one of the following: model platform information supported by the first network element; model description method information supported by the first network element; vendor information of the first network element; network element object information for which a model of the first network element can be shared; first indication information, where the first indication information is used to indicate whether the first network element supports model sharing or model interoperation with other network elements; model accuracy information reachable by the first network element; and model training speed information of the first network element.

According to the network element registration apparatus provided in this embodiment of this application, the network element registration apparatus registers the network element information of the first network element to the second network element by using the network element registration request, to register the first network element to the second network element. Because the network element registration information of the first network element includes the model training related capability information, other network elements can discover, through the second network element, the first network element meeting a model training requirement, to resolve a problem of how the first network element registers the network element information to the second network element and can be discovered by the other network elements.

In a possible implementation, the model description method information supported by the first network element is either of the following: model format information and model language information, where the first network element supports expressing a trained model by using the model format information or the model language information.

In a possible implementation, the information of the first network element further includes at least one of the following: algorithm information for model training used by the first network element; the vendor information of the first network element; the network element object information for which the model of the first network element can be shared; constraint condition information for sharing a model by the first network element; and network element information for storing the model trained by the first network element.

In a possible implementation, the network element object information for which the model of the first network element can be shared includes at least one of the following: information of one or more model inference function network elements and information of one or more model training function network elements.

In a possible implementation, the constraint condition information for sharing a model by the first network element includes at least one of the following: time constraint condition information and area constraint condition information. The time constraint condition information is used to indicate a time when the first network element is allowed to share the model. The area constraint condition information is used to indicate an area in which the first network element is allowed to share the model.

In a possible implementation, the network element information for storing the model trained by the first network element is used to indicate a network element for storing the model trained by the first network element.

The network element registration apparatus provided in this embodiment of this application can implement each process implemented by the first network element in the foregoing method embodiment, with the same technical effect achieved. To avoid repetition, details are not described herein again.

FIG. 13 is a schematic diagram of a possible structure of a network element registration apparatus according to an embodiment of this application. As shown in FIG. 13, the network element registration apparatus 90 may include a receiving module 91.

The receiving module 91 is configured to receive a network element registration request sent by a first network element, where the network element registration request is used to register information of the first network element to a second network element, and the information of the first network element includes model training related capability information of the first network element, where the model training related capability information of the first network element includes at least one of the following: model platform information supported by the first network element; model description method information supported by the first network element; vendor information of the first network element; network element object information for which a model of the first network element can be shared; first indication information, where the first indication information is used to indicate whether the first network element supports model sharing or model interoperation with other network elements; model accuracy information reachable by the first network element; and model training speed information of the first network element.

According to the network element registration apparatus provided in this embodiment of this application, the network element registration apparatus may register the network element information of the first network element to the second network element by receiving the network element registration request sent by the first network element, to register the first network element to the second network element. Because the network element registration information of the first network element includes the model training related capability information, other network elements can discover, through the second network element, the first network element meeting a model training requirement, to resolve a problem of how the first network element registers the network element information to the second network element and can be discovered by the other network elements.

In a possible implementation, the receiving module 91 is further configured to receive a discovery request sent by a third network element, where the discovery request is used to request to discover a target network element, and the discovery request includes at least one of the following: model training related capability information required by the third network element and first information, where the model training related capability information required by the third network element includes at least one of the following: model platform information supported by the target network element as required by the third network element, model description method information supported by the target network element as required by the third network element, model accuracy information reachable by the target network element as required by the third network element, and model training speed information of the target network element as required by the third network element; and the first information includes at least one of the following: algorithm information for model training used by the target network element as required by the third network element, vendor information of the target network element as required by the third network element, constraint condition information for sharing a model by the target network element as required by the third network element, identification information of the third network element, and indication for model sharing, where
the constraint condition information for sharing a model by the target network element as required by the third network element includes at least one of the following: time information supported by the target network element and area constraint information of the target network element.

IIn a possible implementation, the network element registration apparatus 90 provided in this embodiment of this application further includes a determining module. After the receiving module 91 receives the discovery request sent by the third network element, the determining module is configured to determine the target network element based on the discovery request, where model training related capability information of the target network element matches the model training related capability information required by the third network element.

In a possible implementation, the determining module is specifically configured to: determine the target network element based on the model platform information supported by the target network element as required by the third network element, where the target network element supports the model platform information required by the third network element; or determine the target network element based on the model description method information supported by the target network element as required by the third network element, where the target network element supports the model description method information required by the third network element; or determine the target network element based on the model accuracy information reachable by the target network element as required by the third network element, where the target network element supports the reachable model accuracy information required by the third network element; or determine the target network element based on the model training speed information of the target network element as required by the third network element, where the target network element supports the model training speed information required by the third network element.

In a possible implementation, the determining module is specifically configured to: determine the target network element based on the algorithm information for model training used by the target network element as required by the third network element, where the target network element supports the algorithm information used for model training as required by the third network element; or determine the target network element based on the vendor information of the target network element as required by the third network element, where the target network element supports the vendor information required by the third network element; or determine the target network element based on the constraint condition information for sharing a model by the target network element as required by the third network element, where the target network element supports the constraint condition information for sharing a model by the target network element as required by the third network element; or determine the target network element based on the identification information of the third network element, where network element object information for which the model of the target network element can be shared matches the identification information of the third network element; or determine the target network element based on the indication information for model sharing, where the target network element supports model sharing or model interoperation with other network elements.

In a possible implementation, the network element registration apparatus 90 provided in this embodiment of this application further includes a sending module. After the determining module determines the target network element based on the discovery request, the sending module is configured to send a discovery response to the third network element, where the discovery response includes target information, and the target information includes at least one of the following: identification information of the target network element, address information of the target network element, the model platform information supported by the target network element, the model description method information supported by the target network element, the model accuracy information reachable by the target network element, the model training speed information of the target network element, the algorithm information for model training used by the target network element, the vendor information of the target network element, the constraint condition information for sharing a model by the target network element, and network element information for storing a model trained by the target network element.

The network element registration apparatus provided in this embodiment of this application can implement each process implemented by the second network element in the foregoing method embodiment, with the same technical effect achieved. To avoid repetition, details are not described herein again.

FIG. 14 is a schematic diagram of a possible structure of a model request apparatus according to an embodiment of this application. As shown in FIG. 14, the model request model 100 may include a sending module 101 and an obtaining module 102.

The sending module 101 is configured to send a model request message to a first network element, where the model request message is used to request to obtain a model, the model request message includes second information, and the second information includes at least one of the following: model platform information, model description method information, model accuracy information, vendor information of a third network element, and identification information of the third network element. The obtaining module 102 is configured to obtain, from the first network element, information of a model matching the second information.

According to the model request apparatus provided in this embodiment of this application, the model request apparatus may request to obtain the model from the first network element by using the model request. Because the model request includes the second information, the third network element can obtain, from the first network element, the information of the model matching the second information. Therefore, a success rate of model transfer is increased.

In a possible implementation, the model description method information is either of the following: model format information and model language information, and the model description method information is used to instruct the first network element to feed back the model to the third network element by using the model format information or the model language information.

In a possible implementation, the second information further includes at least one of the following: algorithm information used for training the model; version information of the model; and feedback time information of the model.

In a possible implementation, the information of the model includes at least one of the following: file information of the model and download address information of a model file.

In a possible implementation, the sending module 101 is further configured to send a discovery request to a second network element, where the discovery request is used to request to discover a target network element, and the discovery request includes at least one of the following: model training related capability information required by the third network element and first information. The model training related capability information required by the third network element includes at least one of the following: model platform information supported by the target network element as required by the third network element; model description method information supported by the target network element as required by the third network element; vendor information of the first network element; network element object information for which a model of the first network element can be shared; first indication information, where the first indication information is used to indicate whether the first network element supports model sharing or model interoperation with other network elements; model accuracy information reachable by the target network element as required by the third network element; and model training speed information of the target network element as required by the third network element. The first information includes at least one of the following: algorithm information for model training used by the target network element as required by the third network element, vendor information of the target network element as required by the third network element, constraint condition information for sharing a model by the target network element as required by the third network element, identification information of the third network element, and indication information for model sharing, where
the constraint condition information for sharing a model by the target network element as required by the third network element includes at least one of the following: time information supported by the target network element and area constraint information of the target network element.

The indication information for model sharing is used to indicate that the network element required by the third network element is a network element that supports model sharing or model interoperation with other network elements.

In a possible implementation, the model request apparatus 100 provided in this embodiment of this application further includes a receiving module. After the sending module 101 sends the discovery request to the second network element, the receiving module is configured to receive a discovery response sent by the second network element, where the discovery response includes target information, and the target information includes at least one of the following: identification information of the target network element, address information of the target network element, the model platform information supported by the target network element, the model description method information supported by the target network element, the model accuracy information reachable by the target network element, the model training speed information of the target network element, the algorithm information for model training used by the target network element, the vendor information of the target network element, the constraint condition information for sharing a model by the target network element, and network element information for storing a model trained by the target network element.

The model request apparatus provided in this embodiment of this application can implement each process implemented by the third network element in the foregoing method embodiment, with the same technical effect achieved. To avoid repetition, details are not described herein again.

FIG. 15 is a schematic diagram of a possible structure of a model request apparatus according to an embodiment of this application. As shown in FIG. 15, the model request apparatus 110 may include a receiving module 111.

The receiving module 111 is configured to receive a model request message sent by a third network element, where the model request message is used to request to obtain a model, the model request message includes second information, and the second information includes at least one of the following: model platform information, model description method information, model accuracy information, vendor information of the third network element, and identification information of the third network element, where the second information is used by the third network element to obtain, from a first network element, information of a model matching the second information.

According to the model request apparatus provided in this embodiment of this application, the model request apparatus may receive the model request sent by the third network element. Because the model request includes the second information, the third network element can obtain, from the first network element, the information of the model matching the second information. Therefore, a success rate of model transfer is increased.

In a possible implementation, the model description method information is either of the following: model format information and model language information, and the model description method information is used to instruct the first network element to feed back the model to the third network element by using the model format information or the model language information.

In a possible implementation, the second information further includes at least one of the following: algorithm information used for training the model; version information of the model; and feedback time information of the model.

In a possible implementation, the information of the model includes at least one of the following: file information of the model and download address information of a model file.

The model request apparatus provided in this embodiment of this application can implement each process implemented by the first network element in the foregoing method embodiment, with the same technical effect achieved. To avoid repetition, details are not described herein again.

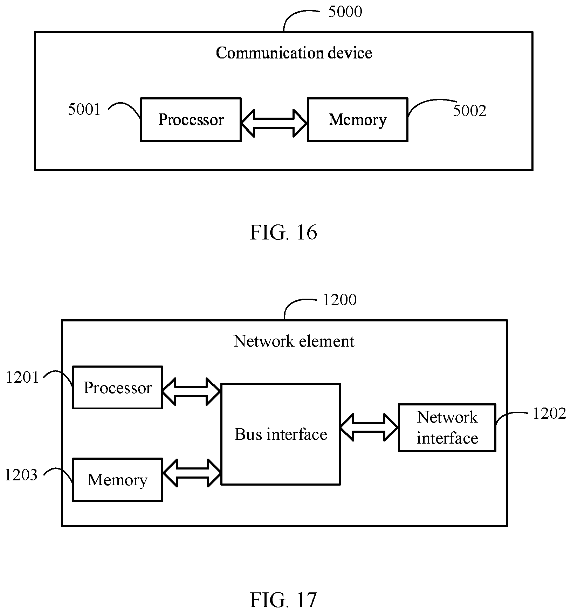

Optionally, as shown in FIG. 16, an embodiment of this application further provides a communication device 5000, including a processor 5001 and a memory 5002. The memory 5002 stores a program or instructions executable on the processor 5001. For example, when the communication device 5000 is a network element, and the program or instructions are executed by the processor 5001, the steps of the foregoing embodiment of the network element registration method on the first network element side are implemented, with the same technical effect achieved; or the steps of the foregoing embodiment of the network element registration method on the second network element side are implemented, with the same technical effect achieved; or the steps of the foregoing embodiment of the model request method on the third network element side are implemented, with the same technical effect achieved; or the steps of the foregoing embodiment of the model request method on the first network element side are implemented, with the same technical effect achieved. To avoid repetition, details are not described herein again.

An embodiment of this application further provides a network element, including a processor and a communication interface. The communication interface is configured to send a network element registration request to a second network element, where the network element registration request is used to register information of a first network element to the second network element, and the information of the first network element includes model training related capability information of the first network element, where the model training related capability information of the first network element includes at least one of the following: model platform information supported by the first network element; model description method information supported by the first network element; vendor information of the first network element; network element object information for which a model of the first network element can be shared; first indication information, where the first indication information is used to indicate whether the first network element supports model sharing or model interoperation with other network elements; model accuracy information reachable by the first network element; and model training speed information of the first network element. The network element embodiment corresponds to the foregoing method embodiment on the first network element side, and each implementation process and implementation of the foregoing method embodiment can be applied to the network element embodiment, with the same technical effect achieved.

An embodiment of this application further provides a network element, including a processor and a communication interface. The communication interface is configured to receive a network element registration request sent by a first network element, where the network element registration request is used to register information of the first network element to a second network element, and the information of the first network element includes model training related capability information of the first network element, where the model training related capability information of the first network element includes at least one of the following: model platform information supported by the first network element; model description method information supported by the first network element; vendor information of the first network element; network element object information for which a model of the first network element can be shared; first indication information, where the first indication information is used to indicate whether the first network element supports model sharing or model interoperation with other network elements; model accuracy information reachable by the first network element; and model training speed information of the first network element. The network element embodiment corresponds to the foregoing method embodiment on the second network element side, and each implementation process and implementation of the foregoing method embodiment can be applied to the network element embodiment, with the same technical effect achieved.

An embodiment of this application further provides a network element, including a processor and a communication interface. The communication interface is configured to send a model request message to a first network element, where the model request message is used to request to obtain a model, the model request message includes second information, and the second information includes at least one of the following: model platform information, model description method information, model accuracy information, vendor information of a third network element, and identification information of the third network element; and obtain, by the third network element from the first network element, information of a model matching the second information. The network element embodiment corresponds to the foregoing method embodiment on the third network element side, and each implementation process and implementation of the foregoing method embodiment can be applied to the network element embodiment, with the same technical effect achieved.

An embodiment of this application further provides a network element, including a processor and a communication interface. The communication interface is configured to receive a model request message sent by a third network element, where the model request message is used to request to obtain a model, the model request message includes second information, and the second information includes at least one of the following: model platform information, model description method information, model accuracy information, vendor information of the third network element, and identification information of the third network element, where the second information is used by the third network element to obtain, from a first network element, information of a model matching the second information. The network element embodiment corresponds to the foregoing method embodiment of the model request method on the first network element side, and each implementation process and implementation of the foregoing method embodiment can be applied to the network element embodiment, with the same technical effect achieved.

Specifically, FIG. 17 is a schematic diagram of a hardware structure of a network element according to an embodiment of this application. The network element is a first network element, or the network element is a second network element, or the network element is a third network element.

As shown in FIG. 17, the network element 1200 includes a processor 1201, a network interface 1202, and a memory 1203. The network interface 1202 is a common public radio interface.

Specifically, the network element 1200 in this embodiment of this application further includes a program or instructions stored in the memory 1203 and executable on the processor 1201. When the processor 1201 invokes the program or instructions in the memory 1203, the method performed by each of the foregoing modules is performed, with the same technical effect achieved. To avoid repetition, details are not described herein again.

The network element provided in this embodiment of this application can implement each process implemented by the first network element, the second network element, and the third network element in the foregoing method embodiment, with the same technical effect achieved. To avoid repetition, details are not described herein again.

An embodiment of this application further provides a readable storage medium. The readable storage medium stores a program or instructions. When the program or instructions are executed by a processor, each process of the foregoing method embodiment is implemented, with the same technical effect achieved. To avoid repetition, details are not described herein again.

The processor is a processor in the communication device in the foregoing embodiment. The readable storage medium includes a computer-readable storage medium, such as a computer read-only memory ROM, a random access memory RAM, a magnetic disk, or an optical disc.

In addition, an embodiment of this application provides a chip. The chip includes a processor and a communication interface. The communication interface is coupled to the processor. The processor is configured to run a program or instructions to implement each process of the foregoing method embodiment, with the same technical effect achieved. To avoid repetition, details are not described herein again.

It should be understood that the chip provided in this embodiment of this application may also be referred to as a system-level chip, a system chip, a chip system, a system-on-chip, or the like.

In addition, an embodiment of this application provides a computer program or program product. The computer program or program product is stored in a storage medium. The computer program or program product is executed by at least one processor to implement each process of the foregoing method embodiment, with the same technical effect achieved. To avoid repetition, details are not described herein again.

An embodiment of this application further provides a communication system, including a first network element, a second network element, and a third network element. The first network element may be configured to perform the steps of the foregoing network element registration method and the steps of the foregoing model request method. The second network element may be configured to perform the steps of the foregoing network element registration method. The third network element may be configured to perform the steps of the foregoing model request method.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

## Claims

1. A network element registration method, wherein the method comprises:
sending, by a first network element, a network element registration request to a second network element, wherein the network element registration request is used to register information of the first network element to the second network element, and the information of the first network element comprises model training related capability information of the first network element, wherein
the model training related capability information of the first network element comprises at least one of the following:
model platform information supported by the first network element;
model description method information supported by the first network element;
vendor information of the first network element;
network element object information for which a model of the first network element can be shared;
first indication information, wherein the first indication information is used to indicate whether the first network element supports model sharing or model interoperation with other network elements;
model accuracy information reachable by the first network element; and
model training speed information of the first network element.

2. The method according to claim 1, wherein the model description method information supported by the first network element is any one of the following: model format information and model language information, wherein
the first network element supports expressing a trained model by using the model format information or the model language information.

3. The method according to any one of claim 1, wherein the information of the first network element further comprises at least one of the following:
algorithm information for model training used by the first network element;
constraint condition information for sharing a model by the first network element; and
network element information for storing the model trained by the first network element.

4. The method according to claim 1, wherein the network element object information for which the model of the first network element can be shared comprises at least one of the following: information of one or more model inference function network elements and information of one or more model training function network elements.

5. The method according to claim 3, wherein the constraint condition information for sharing a model by the first network element comprises at least one of the following: time constraint condition information and area constraint condition information, wherein
the time constraint condition information is used to indicate a time when the first network element is allowed to share the model, and the area constraint condition information is used to indicate an area in which the first network element is allowed to share the model.

6. The method according to claim 3, wherein the network element information for storing the model trained by the first network element is used to indicate a network element for storing the model trained by the first network element.

7. A network element registration method, wherein the method comprises:
receiving, by a second network element, a network element registration request sent by a first network element, wherein the network element registration request is used to register information of the first network element to the second network element, and the information of the first network element comprises model training related capability information of the first network element, wherein
the model training related capability information of the first network element comprises at least one of the following:
model platform information supported by the first network element;
model description method information supported by the first network element;
vendor information of the first network element;
network element object information for which a model of the first network element can be shared;
first indication information, wherein the first indication information is used to indicate whether the first network element supports model sharing or model interoperation with other network elements;
model accuracy information reachable by the first network element; and
model training speed information of the first network element.

8. The method according to claim 7, wherein after the receiving, by a second network element, a network element registration request sent by a first network element, the method further comprises:
receiving, by the second network element, a discovery request sent by a third network element, wherein the discovery request is used to request to discover a target network element, and the discovery request comprises at least one of the following: model training related capability information required by the third network element and first information, wherein
the model training related capability information required by the third network element comprises at least one of the following: model platform information supported by the target network element as required by the third network element, model description method information supported by the target network element as required by the third network element, model accuracy information reachable by the target network element as required by the third network element, and model training speed information of the target network element as required by the third network element; and
the first information comprises at least one of the following: algorithm information for model training used by the target network element as required by the third network element, vendor information of the target network element as required by the third network element, constraint condition information for sharing a model by the target network element as required by the third network element, identification information of the third network element, and indication information for model sharing, wherein
the constraint condition information for sharing a model by the target network element as required by the third network element comprises at least one of the following: time constraint information supported by the target network element and area constraint information of the target network element.

9. The method according to claim 8, wherein after the receiving, by the second network element, a discovery request sent by a third network element, the method further comprises:
determining, by the second network element, the target network element based on the discovery request, wherein model training related capability information of the target network element matches the model training related capability information required by the third network element.

10. The method according to claim 9, wherein the determining, by the second network element, the target network element based on the discovery request comprises at least one of the following:
determining, by the second network element, the target network element based on the model platform information supported by the target network element as required by the third network element, wherein the target network element supports the model platform information required by the third network element;
determining, by the second network element, the target network element based on the model description method information supported by the target network element as required by the third network element, wherein the target network element supports the model description method information required by the third network element;
determining, by the second network element, the target network element based on the model accuracy information reachable by the target network element as required by the third network element, wherein the target network element supports the reachable model accuracy information required by the third network element; and
determining, by the second network element, the target network element based on the model training speed information of the target network element as required by the third network element, wherein the target network element supports the model training speed information required by the third network element.

11. The method according to any one of claims 7 to 10, wherein after the receiving, by the second network element, a discovery request sent by a third network element, the method further comprises:
determining, by the second network element, the target network element based on the first information in the discovery request.

12. The method according to claim 11, wherein the determining, by the second network element, the target network element based on the first information in the discovery request comprises at least one of the following:
determining, by the second network element, the target network element based on the algorithm information for model training used by the target network element as required by the third network element, wherein the target network element supports the algorithm information used for model training as required by the third network element;
determining, by the second network element, the target network element based on the vendor information of the target network element as required by the third network element, wherein the target network element supports the vendor information required by the third network element;
determining, by the second network element, the target network element based on the constraint condition information for sharing a model by the target network element as required by the third network element, wherein the target network element supports the constraint condition for sharing a model as required by the third network element;
determining, by the second network element, the target network element based on the identification information of the third network element, wherein the network element object information for which the model of the target network element can be shared matches the identification information of the third network element; and
determining, by the second network element, the target network element based on the indication information for model sharing, wherein the target network element supports model sharing or model interoperation with other network elements.

13. The method according to any one of claims 9 to 12, wherein after the determining, by the second network element, the target network element based on the discovery request, the method further comprises:
sending, by the second network element, a discovery response to the third network element, wherein the discovery response comprises target information, and the target information comprises at least one of the following: identification information of the target network element, address information of the target network element, the model platform information supported by the target network element, the model description method information supported by the target network element, the model accuracy information reachable by the target network element, the model training speed information of the target network element, the algorithm information for model training used by the target network element, the vendor information of the target network element, the constraint condition information for sharing a model by the target network element, and network element information for storing a model trained by the target network element.

14. A model request method, wherein the method comprises:
sending, by a third network element, a model request message to a first network element, wherein the model request message is used to request to obtain a model, the model request message comprises second information, and the second information comprises at least one of the following: model platform information, model description method information, model accuracy information, vendor information of the third network element, and identification information of the third network element; and
obtaining, by the third network element from the first network element, information of a model matching the second information.

15. The method according to claim 14, wherein the model description method information is any one of the following: model format information and model language information, and the model description method information is used to indicate the first network element to feed back the model to the third network element by using the model format information or the model language information.

16. The method according to claim 14, wherein the second information further comprises at least one of the following:
algorithm information used for training the model;
version information of the model; and
feedback time information of the model.

17. The method according to claim 14, wherein the information of the model comprises at least one of the following: file information of the model and download address information of a model file.

18. The method according to claim 14, wherein before the sending, by a third network element, a model request message to a first network element, the method further comprises:
sending, by the third network element, a discovery request to a second network element, wherein the discovery request is used to request to discover a target network element, and the discovery request comprises at least one of the following: model training related capability information required by the third network element and first information, wherein
the model training related capability information required by the third network element comprises at least one of the following: model platform information supported by the target network element as required by the third network element, model description method information supported by the target network element as required by the third network element, model accuracy information reachable by the target network element as required by the third network element, and model training speed information of the target network element as required by the third network element; and
the first information comprises at least one of the following: algorithm information for model training used by the target network element as required by the third network element, vendor information of the target network element as required by the third network element, and constraint condition information for sharing a model by the target network element as required by the third network element, wherein
the constraint condition information for sharing a model by the target network element as required by the third network element comprises at least one of the following: time information supported by the target network element and area constraint information of the target network element.

19. The method according to claim 18, wherein after the sending, by the third network element, a discovery request to a second network element, the method further comprises:
receiving, by the third network element, a discovery response sent by the second network element, wherein the discovery response comprises target information, and the target information comprises at least one of the following: identification information of the target network element, address information of the target network element, the model platform information supported by the target network element, the model description method information supported by the target network element, the model accuracy information reachable by the target network element, the model training speed information of the target network element, the algorithm information for model training used by the target network element, the vendor information of the target network element, the constraint condition information for sharing a model by the target network element, and network element information for storing a model trained by the target network element.

20. A model request method, wherein the method comprises:
receiving, by a first network element, a model request message sent by a third network element, wherein the model request message is used to request to obtain a model, the model request message comprises second information, and the second information comprises at least one of the following: model platform information, model description method information, model accuracy information, vendor information of the third network element, and identification information of the third network element, wherein
the second information is used by the third network element to obtain, from the first network element, information of a model matching the second information.

21. The method according to claim 20, wherein the model description method information is any one of the following: model format information and model language information, and the model description method information is used to instruct the first network element to feed back the model to the third network element by using the model format information or the model language information.

22. The method according to claim 20, wherein the second information further comprises at least one of the following:
algorithm information used for training the model;
version information of the model;
feedback time information of the model.

23. The method according to any one of claims 20 to 22, wherein the information of the model comprises at least one of the following: file information of the model and download address information of a model file.

24. The method according to any one of claims20 to 23, wherein the method further comprises: obtaining, by the first network element based on the second information, the information of the model matching the second information.

25. The method according to claim 24, wherein the obtaining, by the first network element based on the second information, the information of the model matching the second information comprises at least one of the following:
obtaining, by the first network element, a target model based on the model platform information comprised in the second information, wherein the target model is generated based on a model platform corresponding to the model platform information; and
obtaining, by the first network element, a target model based on the model description method information comprised in the second information, wherein the target model is expressed based on the model language information or model format information corresponding to the model description method information.

26. The method according to any one of claims 20 to 25, wherein the method further comprises at least one of the following:
determining, by the first network element based on the vendor information of the third network element comprised in the second information, that the first network element allows model sharing or model interoperation with the third network element; and
determining, by the first network element based on the identification information of the third network element comprised in the second information, that the first network element allows model sharing or model interoperation with the third network element.

27. A network element registration apparatus, applied to a first network element, wherein the apparatus comprises a sending module, wherein
the sending module is configured to send a network element registration request to a second network element, wherein the network element registration request is used to register information of the first network element to the second network element, and the information of the first network element comprises model training related capability information of the first network element, wherein
the model training related capability information of the first network element comprises at least one of the following:
model platform information supported by the first network element;
model description method information supported by the first network element;
vendor information of the first network element;
network element object information for which a model of the first network element can be shared;
first indication information, wherein the first indication information is used to indicate whether the first network element supports model sharing or model interoperation with other network elements;
model accuracy information reachable by the first network element; and
model training speed information of the first network element.

28. A network element registration apparatus, applied to a second network element, wherein the apparatus comprises a receiving module, wherein
the receiving module is configured to receive a network element registration request sent by a first network element, wherein the network element registration request is used to register information of the first network element to the second network element, and the information of the first network element comprises model training related capability information of the first network element, wherein
the model training related capability information of the first network element comprises at least one of the following:
model platform information supported by the first network element;
model description method information supported by the first network element;
vendor information of the first network element;
network element object information for which a model of the first network element can be shared;
first indication information, wherein the first indication information is used to indicate whether the first network element supports model sharing or model interoperation with other network elements;
model accuracy information reachable by the first network element; and
model training speed information of the first network element.

29. A model request apparatus, applied to a third network element, wherein the apparatus comprises a sending module and an obtaining module, wherein
the sending module is configured to send a model request message to a first network element, wherein the model request message is used to request to obtain a model, the model request message comprises second information, and the second information comprises at least one of the following: model platform information, model description method information, model accuracy information, vendor information of the third network element, and identification information of the third network element; and
the obtaining module is configured to obtain, from the first network element, information of a model matching the second information.

30. A model request apparatus, applied to a first network element, wherein the apparatus comprises a receiving module, wherein
the receiving module is configured to receive a model request message sent by a third network element, wherein the model request message is used to request to obtain a model, the model request message comprises second information, and the second information comprises at least one of the following: model platform information, model description method information, model accuracy information, vendor information of the third network element, and identification information of the third network element, wherein
the second information is used by the third network element to obtain, from the first network element, information of a model matching the second information.

31. A network element, comprising a processor and a memory, wherein the memory stores a program or instructions executable on the processor, and when the program or instructions are executed by the processor, the steps of the network element registration method according to any one of claims 1 to 6 are implemented.

32. A network element, comprising a processor and a memory, wherein the memory stores a program or instructions executable on the processor, and when the program or instructions are executed by the processor, the steps of the network element registration method according to any one of claims 7 to 13 are implemented.

33. A network element, comprising a processor and a memory, wherein the memory stores a program or instructions executable the processor, and when the program or instructions are executed by the processor, the steps of the model request method according to any one of claims 14 to 19 are implemented.

34. A network element, comprising a processor and a memory, wherein the memory stores a program or instructions executable on the processor, and when the program or instructions are executed by the processor, the steps of the model request method according to any one of claims20 to 26 are implemented.

35. A communication system, wherein the communication system comprises the network element registration apparatus according to claim 27, the network element registration apparatus according to claim 28, the model request apparatus according to claim 29, and the model request apparatus according to claim30; or
the communication system comprises the network element according to any one of claims 31 to 34.

36. A readable storage medium, wherein the readable storage medium stores a program or instructions, and when the program or instructions are executed by a processor, the steps of the network element registration method according to any one of claims 1 to 6 are implemented, or the steps of the network element registration method according to any one of claims 7 to 13 are implemented, or the steps of the model request method according to any one of claims 14 to 19 are implemented, or the steps of the model request method according to any one of claims 20 to 26 are implemented.
